# EUROPÄISCHE PATENTSCHRIFT

(11) **EP 3 121 484 B1**
(45) Veröffentlichungstag und Bekanntmachung des Hinweises auf die Patenterteilung: **04.07.2018**
(21) Anmeldenummer: 16178714.8
(22) Anmeldetag: 08.07.2016
(51) Int. Cl.: F16H 7/08

(54) **SPANNVORRICHTUNG**
CLAMPING DEVICE
DISPOSITIF DE SERRAGE

(30) Priorität: 21.07.2015 DE 102015111809
(43) Veröffentlichungstag der Anmeldung: 25.01.2017
(73) Patentinhaber: Muhr und Bender KG, 57439 Attendorn (DE)
(72) Erfinder: Bauerdick, Thomas, 58802 Balve (DE); Jud, Joachim, 57567 Daaden (DE); Schulte, Michael, 57489 Drolshagen (DE); Nowadnick, Kai, 51491 Overath (DE)
(74) Vertreter: Neumann Müller Oberwalleney & Partner Patentanwälte

(56) Entgegenhaltungen:
- EP-A2- 1 277 989
- DE-A1- 19 647 225
- DE-C1- 4 300 178
- US-A- 5 772 549

## Beschreibung

Die Erfindung betrifft eine Spannvorrichtung für einen Zugmitteltrieb, wie einen Riemen- oder Kettentrieb. Ein Zugmitteltrieb umfasst üblicher Weise ein endloses Zugmittel wie einen Riemen oder eine Kette und zumindest zwei Scheiben, von denen eine als Antrieb und eine als Abtrieb des Zugmitteltriebs fungieren kann. Derartige Zugmitteltriebe kommen beispielsweise an Verbrennungsmotoren eines Kraftfahrzeugs zum Antreiben von Nebenaggregaten zum Einsatz, wobei eine erste Scheibe auf der Kurbelwelle des Verbrennungsmotors sitzt und den Riemen antreibt.

Weitere Antriebsscheiben sind den Nebenaggregaten zugeordnet, wie beispielsweise Wasserpumpe, Lichtmaschine oder Klimaanlagenkompressor, und werden vom Zugmitteltrieb drehend angetrieben. Bei herkömmlichen Zugmitteltrieben sind die Nebenaggregate als Verbraucher ausgelegt, das heißt sie werden von der Riemenscheibe der Kurbelwelle über den Riemen angetrieben. Dabei ist zwischen der Kurbelwelle und dem in Umlaufrichtung des Zugmittels benachbarten Aggregat, in der Regel der Generator, das Lostrum ausgebildet. Um hier eine ausreichende Umschlingung des Zugmittels um die Antriebsscheibe zu gewährleisten, wird der Riemen mittels einer Spannrolle der Spannvorrichtung vorgespannt.

Aus der gattungsgemässen DE 10 2007 050 204 A1 ist eine Spannvorrichtung für einen Zugmitteltrieb wie einen Riemen- oder Kettentrieb bekannt, mit einem gegenüber einem Grundkörper um eine Schwenkachse verschwenkbaren Spannarm. Zwischen dem Spannarm und dem Grundkörper ist eine Torsionsfeder in Form einer Schraubenfeder vorgesehen. Der Spannarm ist durch eine Radiallagerung und eine von dieser getrennt angeordneten Axiallagerung gleitgelagert, wobei die Axiallagerung als Kegelreibradlagerung ausgebildet ist. Der Spannarm ist axial zwischen dem Grundkörper und einer mit dem Grundkörper verbundenen Kegelscheibe axial fixiert. Die Torsionsfeder ist unter Druck zwischen dem Grundkörper und dem Spannarm eingebaut und übt entsprechend eine Druckkraft auf den Nabenabschnitt des Spannarms aus, welche sich auf die Kegelreibradlagerung überträgt. Das heißt die Kegelradreibradlagerung wird durch axiale Druckbelastung der Torsionsfeder axial beaufschlagt.

Aus der DE 43 00 178 C1 ist eine Riemenspanvorrichtung mit einem Spannhebel, einer Bodenplatte, einer Lagerbuchse, einer Dämpfungseinrichtung und einer Schraubenfeder bekannt. Die Schraubenfeder ist zwischen Spannhebel und Bodenplatte angeordnet und hält den Treibriemen auf Spannung. Die Dämpfungseinrichtung umfasst ein von der Schraubenfeder separates Federelement, das ein Druckstück mit Dämpfungskegel axial druckbeaufschlagt und die Dämpfung gewährleistet. Die axiale Fixierung des Spannhebels gegenüber der Bodenplatte wird über separate Schraubverbindungen hergestellt.

Aus der EP 1 277 989 A2 ist eine Riemenspannvorrichtung mit einem Befestigungsgehäuse und einem hiermit schwenkbar verbundenen Rollenträger bekannt. Der Rollenträger ist gegenüber dem Befestigungsgehäuse mit einem Lager radial und axial gelagert und mit einer auf Zug belasteten Schraubenfeder gegenüber diesem vorgespannt. Der Rollenträger ist somit über das Lager und die Schraubenfeder am Befestigungsgehäuse axial fixiert. Es ist eine Dämpfungsvorrichtung vorgesehen, die Bewegungen zwischen dem Rollenträger und dem Befestigungsgehäuse derart dämpft, dass die Dämpfung in Richtung ansteigender Spannkraft größer ist als in Richtung abfallender Spannkraft. Die Dämpfungsvorrichtung weist eine Dämpfungsbuchse und eine Bandfeder auf, die mit ihrem ersten Ende drehfest am Befestigungsgehäuse oder am Rollenträger befestigt ist und mit ihrem zweiten Ende drehfest an der Dämpfungsbuchse befestigt ist.

Aus der DE 196 03 558 C2 ist eine Riemenspannvorrichtung mit einem Aufnahmegehäuse, einem hiermit schwenkbar verbundenen Rollenträger und einer Lager- und Dämpfungsvorrichtung bekannt. Die Lager- und Dämpfungsvorrichtung umfasst einen Lager- und Dämpfungskegel, der mittels einer Schraubenfeder auf Zug und Torsion vorgespannt ist.

Aus der EP 0 858 563 B1 ist eine Spanneinrichtung für ein Zugmittel bekannt, die ein Gehäuse und einen gegenüber dem Gehäuse mittels eines Gleitlagers drehbar gelagerten Spannarm umfasst. Die Gleitlagerflächen des Gleitlagers sind als zueinander parallele und zur Spannarmachse konzentrische Kegelflächen ausgebildet. Es ist eine Schraubendrehfeder zwischen einer Stütze am Spannarm und einer Stütze am Gehäuse abgestützt, mit der im eingebauten Zustand eine Torsionsvorspannung und eine axiale Vorspannung aufgebracht werden. Dabei wird eine axiale Kraft der Schraubendrehfeder als zu den Gleitlagerflächen senkrecht wirkende Reaktionskraft in das Gleitlager eingeleitet, so dass die Gleitlagerflächen unter der axialen Kraft gegeneinander gedrückt sind.

Spannvorrichtungen mit zylindrischen Dämpfungssystemen sind verhältnismäßig komplex und daher aufwendig in Bezug auf Fertigung und Montage. Spannvorrichtungen mit konischen Dämpfungssystemen sind anfälliger für einen ungewünschten Schiefstand des Spannarms gegenüber dem Gehäuse.

Der vorliegenden Erfindung liegt die Aufgabe zugrunde, eine Spannvorrichtung für einen Zugmitteltrieb vorzuschlagen, die einfach und kostengünstig aufgebaut ist und eine lange Lebensdauer aufweist.

Eine Lösung besteht in einer Spannvorrichtung für ein Zugmittel, umfassend: ein Aufnahmegehäuse; einen Rollenträger, der mit dem Aufnahmegehäuse schwenkbar verbunden ist; eine Schraubenzugfeder, die an dem Aufnahmegehäuse und dem Rollenträger jeweils in Umfangsrichtung und in axiale Richtung abgestützt ist, wobei der Rollenträger und das Aufnahmegehäuse mittels der Schraubenzugfeder gegeneinander axial fixiert sind; eine Lageranordnung, mit welcher der Rollenträger in dem Aufnahmegehäuse um eine Drehachse drehbar gelagert ist; eine Dämpfungsanordnung zum Dämpfen einer Drehbewegung des Rollenträgers relativ zum Aufnahmegehäuse, wobei die Dämpfungsanordnung axial beabstandet zur Lageranordnung angeordnet ist und durch Zugbelastung der Schraubenzugfeder axial beaufschlagt wird.

Ein Vorteil der Spannvorrichtung ist, dass der Rollenträger gegenüber dem Aufnahmegehäuse aufgrund des axialen Abstandes zwischen der Lageranordnung und der Dämpfungsanordnung sicher gegen Querkräfte abgestützt ist. Das Risiko eines ungewünschten Verkippens des Rollenträgers gegenüber dem Aufnahmegehäuse und damit eines erhöhten Verschleiß wird minimiert. Gleichzeitig wirkt die Schraubenfeder als Zugfeder, welche den Rollenträger in Richtung zum Aufnahmegehäuse axial beaufschlagt. Mit anderen Worten werden der Rollenträger und das Aufnahmegehäuse von der Schraubenfeder axial in Richtung aufeinander zu gezogen. Die Schraubenfeder ist am Aufnahmegehäuse und am Rollenträger in entgegengesetzten Drehrichtungen abgestützt. Bei einer Schwenkbewegung des Spannarms gegen die in Umfangsrichtung wirkende Stützkraft des Aufnahmegehäuses wird die Schraubenfeder radial aufgeweitet, wobei die Schraubenfeder mit zunehmender radialer Aufweitung zunehmend auf Zug belastet wird. Somit führt ein zunehmendes Verschwenken des Rollenträgers gegenüber dem Aufnahmegehäuse zu einer zunehmenden Axialkraft zwischen den genannten Bauteilen aufeinander zu, so dass auch das Reibmoment der Dämpfungsanordnung aufgrund der zunehmenden Axialkraft und damit die Dämpfung entsprechend zunimmt. Die Dämpfungsrate ist somit funktional abhängig vom Grad der Schwenkbewegung, was sich insgesamt günstig auf das Dämpfungsverhalten auswirkt.

Die Spannvorrichtung dient zum Spannen eines Zugmittels eines Zugmitteltriebs. Das Zugmittel kann ein Riemen für einen Riementrieb sein, wobei die Spannvorrichtung dann eine Riemenspannvorrichtung wäre. Es ist aber auch denkbar, dass das Zugmittel eine Kette für einen Kettentrieb ist, der von der Spannvorrichtung entsprechend vorgespannt wird.

Es ist vorgesehen, dass das Aufnahmegehäuse mit einem ortsfesten Bauteil verbindbar ist, beispielsweise mit dem Motorblock eines Kraftfahrzeugs oder einem hiermit verbundenen Bauteil. Hierfür hat das Aufnahmegehäuse entsprechende Befestigungsmittel, beispielsweise für eine Schraubverbindung. Das Aufnahmegehäuse kann topfförmig gestaltet sein mit einem Boden und einem Mantelabschnitt, innerhalb dem ein Aufnahmeraum für den Rollenträger und die Schraubenfeder gebildet ist.

Der Rollenträger ist ausgestaltet, um eine Rolle zum Beaufschlagen des Zugmittels zu tragen. Hierfür hat der Rollenträger einen Armabschnitt, an dem die Rolle um eine zur Schwenkachse parallele Rollenachse drehbar gelagert ist. Insofern können der Rollenträger auch als Spannarm und die Rolle auch als Spannrolle bezeichnet werden. Der Rollenträger kann als Gussteil, beispielsweise aus einem Leichtmetall aus Aluminium oder einer Aluminiumlegierung insbesondere im Wege eines Druckgussverfahrens hergestellt werden. Dies gilt gleichermaßen auch für das Aufnahmegehäuse.

Nach einer Ausführung ist vorgesehen, dass die Lageranordnung einen mittleren Lagerdurchmesser aufweist, der kleiner ist als ein mittlerer Durchmesser der Dämpfungsanordnung. Mit mittlerem Durchmesser ist in diesem Fall jeweils der mittlere Durchmesser zwischen einem größten Durchmesser und einem kleinsten Durchmesser der jeweiligen Anordnung gemeint.

Die Lageranordnung kann eine Lagerbuchse aufweisen, die zwischen einem Lagerteil des Aufnahmegehäuses und einem Lagerteil des Rollenträgers angeordnet ist. Die Lagerbuchse ist insbesondere im Wesentlichen zylindrisch gestaltet, womit die Möglichkeit mit umfasst sein soll, dass die Lagerbuchse eine leicht konische Fläche von bis zu 3° relativ zur Schwenkachse aufweist. Durch eine leicht konische Ausgestaltung können die entsprechenden Teile bei der Fertigung leichter entformt werden. Sofern die Lageranordnung leicht konisch gestaltet ist, verjüngt sie sich in Richtung zum Boden des Aufnahmegehäuses. Das Lagerteil des Aufnahmegehäuses kann in Form einer Lagerhülse gestaltet sein. In diesem Fall ist das Lagerteil des Rollenträgers in Form eines Lagerbolzens gestaltet, der in die Lagerhülse des Aufnahmegehäuses unter Zwischenschaltung der Lagerbuchse eingesteckt ist. Der Lagerbolzen kann einteilig an ein Nabenteil des Rollenträgers angeformt oder angegossen sein. Alternativ kann der Lagerbolzen auch als separates Bauteil hergestellt und in das Nabenteil eingepresst oder eingespritzt sein. Als Lagerwerkstoff für die Lagerbuchse können beispielsweise geeignete Kunststoffe oder mit reibungsminderndem Material wie PTFE beschichtete Stahlbuchsen verwendet werden. Die Lagerbuchse und die Dämpfungsbuchse können aus unterschiedlichen Materialien hergestellt sein, wobei die Dämpfungsbuchse in diesem Fall aus einem Material mit höherem Reibungskoeffizienten gestaltet ist als die Lagerbuchse. Es ist für die Ausgestaltung der Lageranordnung prinzipiell auch die kinematische Umkehrung denkbar, das heißt dass das Lagerteil des Rollenträgers als Lagerhülse gestaltet ist. In diesem Fall wäre der Lagerbolzen am Boden des Aufnahmegehäuses vorgesehen.

Nach einer möglichen Ausgestaltung ist axial zwischen der Lageranordnung und der Dämpfungsanordnung ein abstützungsfreier Zwischenraum gebildet, in dem keinerlei Abstützung von über den Rollenträger eingeleiteten Querkräften durch das Aufnahmegehäuse gegeben ist. Mit anderen Worten erfolgt die Abstützung der von der Spannrolle in den Rollenträger eingeleiteten Querkräften allein durch die Lageranordnung und die hiervon axial beabstandete Dämpfungsanordnung. Vorzugsweise ist eine axiale Länge des abstützungsfreien Zwischenraums größer als die axiale Länge der Lageranordnung und/oder als die axiale Länge der Dämpfungsanordnung. Auf diese Weise ergibt sich eine besonders gute Abstützung gegen Querkräfte.

Es ist insbesondere vorgesehen, dass die Dämpfungsanordnung zumindest eine Reibflächenpaarung aufweist, die von einer Zugkraft der Schraubenzugfeder axial beaufschlagt wird. Die Reibflächenpaarung kann prinzipiell konisch oder als radiale Flächenpaarung gestaltet sein. Durch die auf die Reibflächenpaarung wirkende Axialkraft entsteht ein Reibmoment, so dass eine relative Drehbewegung des Rollenträgers gegenüber dem Aufnahmegehäuse gedämpft wird. Sofern die Reibflächenpaarung eine konische Reibfläche umfasst ist insbesondere vorgesehen, dass ein mit der Schwenkachse eingeschlossener Konuswinkel größer ist als ein zwischen der äußeren Lagerfläche der Lagerbuchse und der Schwenkachse eingeschlossener Winkel. Über die Größe des Konuswinkels lässt sich die Höhe des Reibmoments und damit der Dämpfungsgrad der Spannvorrichtung eingestellt werden. Beispielsweise kann der Konuswinkel zwischen 3° und 10° liegen.

In Konkretisierung kann die Dämpfungsanordnung eine Dämpfungsbuchse aufweisen, die zwischen einer inneren Konusfläche des Aufnahmegehäuses und einer äußeren Ringfläche des Rollenträgers angeordnet ist. Die Dämpfungsbuchse hat vorzugsweise eine äußere konische Reibfläche, die mit der inneren Konusfläche des Aufnahmegehäuses in Reibkontakt ist. Dabei bilden die konische Reibfläche der Dämpfungsbuchse und die innere Konusfläche des Aufnahmegehäuses eine Reibflächenpaarung der Dämpfungsanordnung. Eine zweite Reibflächenpaarung kann zwischen einer äußeren Ringfläche des Rollenträgers und einer Innenfläche der Lagerbuchse, welche gegengleich gestaltet sind und insbesondere zylindrisch oder konisch sein können. Durch den mittelbaren Reibflächenkontakt zwischen dem Aufnahmegehäuse und dem Rollenträger mittels der Dämpfungsbuchse, hat die Dämpfungsanordnung gleichzeitig auch eine radiale und axiale Lagerfunktion zwischen Gehäuse und Träger. Insofern kann die Dämpfungsanordnung auch als kombinierte Dämpfungs- und Lageranordnung bezeichnet werden.

Nach einer Ausführungsform kann der Rollenträger ein Nabenelement und Ringelement aufweisen, wobei das Ringelement das Nabenelement radial außen umgibt und die äußere Ringfläche zur Aufnahme der Dämpfungsbuchse bildet, wobei zwischen dem Nabenelement und dem Ringelement ein Ringraum gebildet ist, in welchem ein Abschnitt der Schraubenfeder angeordnet ist. Insbesondere ist vorgesehen, dass Nabenelement und Ringelement einteilig hergestellt sind, beispielsweise als Gussbauteil, und insofern auch als Nabenabschnitt und Ringabschnitt des Rollenträgers bezeichnet werden können. Die äußere Ringfläche des Ringelements kann zylindrisch oder konisch sein.

Nach einer bevorzugten Ausgestaltung weist die Schraubenfeder einen ersten Endabschnitt auf, der in eingeschraubtem Zustand am Aufnahmegehäuse in Umfangsrichtung und in axialer Richtung abgestützt ist, und einen zweiten Endabschnitt, der in eingeschraubtem Zustand am Rollenträger in Umfangsrichtung und in axialer Richtung abgestützt ist.

Zur axialen und drehmäßigen Abstützung der Schraubenfeder gegenüber dem Aufnahmegehäuse kann vorgesehen sein, dass das Aufnahmegehäuse einen Boden mit gewindeartigen Eingriffsmitteln und einem Anschlag am Ende der gewindeartigen Eingriffsmittel aufweist. Dabei sind die gewindeartigen Eingriffsmittel so gestaltet, dass die Schraubenfeder in die gewindeartigen Eingriffsmittel bis zum Erreichen des Anschlags einschraubbar ist. Auf diese Weise wird eine auf einfache Weise eine axiale Fixierung und eine Fixierung in Umfangsrichtung realisiert. Separate Befestigungsmittel sind folglich nicht erforderlich.

Entsprechendes gilt auch für das zweite Ende der Schraubenfeder. Hierfür kann der Rollenträger in einem Deckelabschnitt gewindeartige Eingriffsmittel und einen Anschlag am Ende der gewindeartigen Eingriffsmittel aufweisen. Nach dem Einsetzen der Schraubenfeder in das Aufnahmegehäuse und in Eingriff bringen mit den Eingriffsmitteln kann der Rollenträger auf das Aufnahmegehäuse aufgesetzt werden. Dabei kann der zweite Endabschnitt der Schraubenfeder durch eine Einsteck- und Drehbewegung des Rollenträgers gegenüber dem Aufnahmegehäuse mit den gewindeartigen Eingriffsmitteln des Deckels in Eingriff gebracht werden. Durch Verdrehen des Rollenträgers gegenüber der Schraubenfeder greift das zweite Federende zunehmend in die gewindeartigen Eingriffsmittel ein, wobei die Schraubenfeder auf Zug axial vorgespannt wird.

In vollständig montiertem Zustand sind der Rollenträger und das Aufnahmegehäuse axial zueinander fixiert und axial vorgespannt. Die Schraubenfeder erfüllt somit mehrere Funktionen, nämlich eine federnde Abstützung des Rollenträgers gegenüber dem Gehäuse in Drehrichtung, eine axiale Fixierung des Rollenträgers am Gehäuse, und ein axiales Beaufschlagen der Reibflächenpaarung der Dämpfungsanordnung. Gesonderte Befestigungsmittel zum Verbinden des Trägers am Gehäuse sind nicht erforderlich, so dass die Spannvorrichtung besonders wenige Teile umfasst und einfach und kostengünstig herstellbar ist. Ein weiterer Vorteil ist, dass bei zunehmendem Verschwenken des Rollenträgers gegenüber dem Aufnahmegehäuse eine zunehmende Zugkraft von der Schraubenfeder auf den Rollenträger in Richtung Gehäuse einwirkt. Das heißt der Grad der Dämpfung der Spannvorrichtung ist abhängig von der Auslenkung des Rollenträgers.

Die gewindeartigen Eingriffsmittel am Aufnahmegehäuse und am Rollenträger können in Form eines gewindeartigen Kanals gestaltet sein, der durch mehrere über den Umfang verteilte Stege gebildet sein kann.

Bevorzugte Ausführungsbeispiele werden nachstehend anhand der Zeichnungsfiguren erläutert. Hierin zeigt
- Figur 1: eine erfindungsgemäße Spannvorrichtung in einer ersten Ausführungsform in perspektivischer Explosionsdarstellung;
- Figur 2: die Spannvorrichtung gemäß Figur 1 im Längsschnitt; und
- Figur 3: die erfindungsgemäße Spannvorrichtung in einer leicht abgewandelten zweiten Ausführungsform in Explosionsdarstellung in Seitenansicht;
- Figur 4: die Spannvorrichtung gemäß Figur 3 im Längsschnitt; und
- Figur 5: das Aufnahmegehäuse der Spannvorrichtung gemäß den Figuren 3 und 4 in perspektivischer Darstellung, teilweise geschnitten.

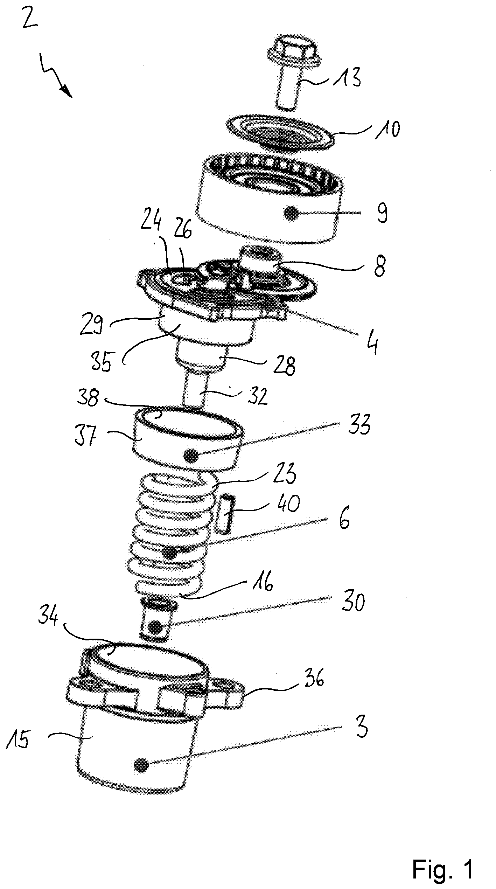

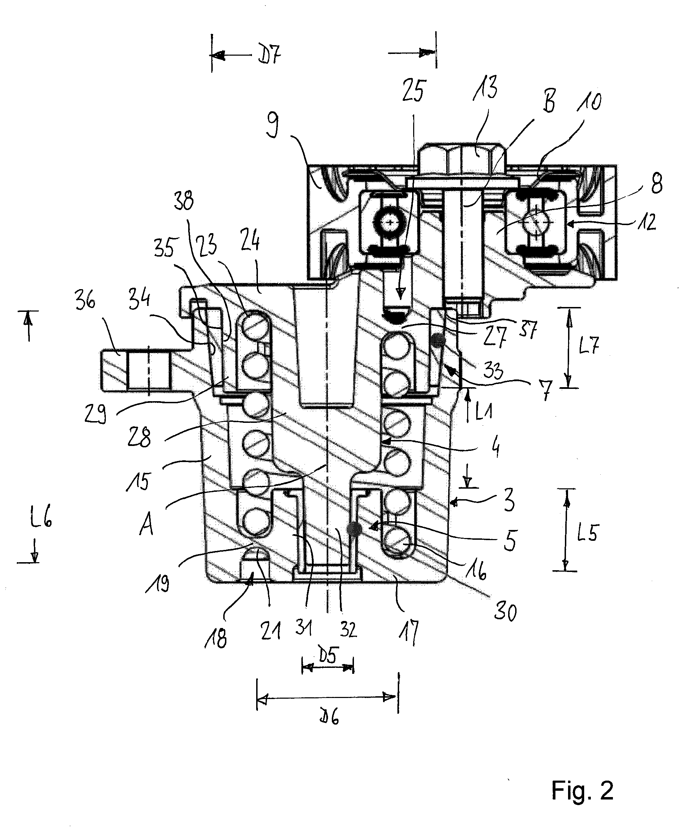

Die Figuren 1 und 2, die im Folgenden gemeinsam beschrieben werden, zeigen eine erfindungsgemäße Spannvorrichtung 2. Die Spannvorrichtung ist zum Spannen eines endlosen Riemens eines Riementriebs (nicht dargestellt) gestaltet und kann entsprechend auch als Riemenspannvorrichtung bezeichnet werden. Es versteht sich, dass die Spannvorrichtung 2 auch zum Spannen eines Kettentriebs verwendet beziehungsweise gestaltet sein kann. Die Riemenspannvorrichtung 2 umfasst ein Aufnahmegehäuse 3, einen Rollenträger 4, der relativ zum Aufnahmegehäuse 3 mittels einer Lageranordnung 5 und mittels einer Dämpfungsanordnung 7 um eine Schwenkachse A dämpfend gelagert ist, sowie eine Schraubenfeder 6, mit welcher der Rollenträger 4 gegenüber dem Aufnahmegehäuse 3 in axiale Richtung und in Umfangsrichtung federnd abgestützt ist. Das Aufnahmegehäuse 3 kann an einem ortsfesten Bauteil wie einem Aggregat oder Motorblock (nicht dargestellt) oder einem hiermit verbundenen Bauteil befestigt werden. Zur Befestigung des Aufnahmegehäuses 3 hat dieses mehrere nach radial außen vorstehende Befestigungsabschnitte 36 mit Bohrungen, durch welche Schrauben beziehungsweise Bolzen 40 zur Befestigung an dem ortsfesten Bauteil durchgesteckt werden können. Der Rollenträger 4 und das Aufnahmegehäuse 3 können jeweils einteilig hergestellt werden, beispielsweise als Gussbauteil, wobei eine Herstellung aus einem geeigneten Kunststoff grundsätzlich ebenso denkbar ist.

Der Rollenträger 4 trägt an einem freien Endabschnitt eine Spannrolle 9, die um eine zur Schwenkachse A parallele Drehachse B drehbar ist. Die Spannrolle 9 ist an einem Lagerzapfen 8 des Rollenträgers 4 drehbar gelagert und mittels einer Schraube 13 an diesem befestigt. Eine von der Schraube 13 an dem Lagerzapfen 8 angebrachte und das Lager 12 abdeckende Scheibe 10 schützt das Lager 12 vor eindringendem Schmutz. Der Rollenträger 4 ist über die Lageranordnung 5 und die Dämpfungsanordnung 7 axial und radial gegenüber dem Aufnahmegehäuse 3 um die Schwenkachse A drehbar gelagert, wobei eine relative Drehbewegung des Rollenträgers 4 gegenüber dem Aufnahmegehäuse 3 durch in der Dämpfungsanordnung 7 entstehende Reibmomente gedämpft wird. Die Dämpfungsanordnung 7 ist axial beabstandet zur Lageranordnung 5 angeordnet und wird durch eine Zugvorspannung der Schraubenfeder 6, welche am Aufnahmegehäuse 3 einerseits und am Rollenträger andererseits in entgegengesetzte axiale Richtungen axial abgestützt ist, axial beaufschlagt. Insofern kann die Schraubenfeder 6 auch als Schraubenzugfeder bezeichnet werden.

Die Schraubenfeder 6 ist im Wesentlichen koaxial zur Schwenkachse A in einem zwischen dem Aufnahmegehäuse 3 und dem Rollenträger 4 gebildeten Ringraum angeordnet. Die Anzahl der Windungen der Schraubenfeder 6 kann beispielsweise zwischen vier und acht liegen, und beträgt vorliegend etwa sechs, wobei es sich versteht, dass je nach Baugröße, Federdrahtdurchmesser und Anwendungsfall auch andere Windungszahlen denkbar sind. Das Verhältnis von Länge L6 der Schraubenfeder 6 zum Nenndurchmesser D6 kann im Einbauzustand der Schraubenfeder, in welchem die Schraubenfeder axial auf Zug vorgespannt ist, beispielsweise zwischen 1,0 und 2,5, insbesondere zwischen 1,5 und 2,0 liegen. Es versteht sich, dass die genannten Werte nicht einschränkend gemeint sind und dass das genannte Verhältnis von Länge zu Federdurchmesser im Einbauzustand unter anderem auch vom Drahtdurchmesser des Federdrahts abhängt. Je größer der Drahtdurchmesser, desto kleiner kann die axiale Länge der Schraubenfeder ausgelegt sein.

Ein erster Endabschnitt 16 der Schraubenfeder 6 ist an einem Bodenteil 17 des Aufnahmegehäuses 3 in Umfangsrichtung und in axialer Richtung abgestützt. Der entgegengesetzte zweite Endabschnitt 23 der Schraubenfeder 6 ist an einem Deckelteil 24 des Rollenträgers 4 in Umfangsrichtung und in axialer Richtung abgestützt. Die Schraubenfeder 6 bewirkt eine Verspannung des Rollenträgers 4 gegenüber dem Aufnahmegehäuse 3, so dass der Riemen des Riementriebes vorgespannt wird. Gleichzeitig ist der Rollenträger 4 mittels der Schraubenfeder 6 am Aufnahmegehäuse 3 axial fixiert.

Zur axialen Abstützung der Schraubenfeder 6 gegenüber dem Aufnahmegehäuse 3 sind am Bodenteil 17 des Aufnahmegehäuses gewindeartige Eingriffsmittel 18 vorgesehen, die so gestaltet sind, dass die Schraubenfeder 6 hierein eingeschraubt werden kann. Die Eingriffsmittel 18 umfassen mehrere über den Umfang verteilte und relativ zueinander axial versetzte Stege 19, welche von dem ersten Endabschnitt 16 der Schraubenfeder 6 beim Einschrauben hintergriffen werden. Dabei bilden die Stege 19 insgesamt einen gewindeartigen Kanal, dessen Steigung in etwa der Steigung des ersten Endabschnitts 16 der Schraubenfeder 6 entspricht. Am Ende des gewindeartigen Kanals hat das Bodenteil 17 einen Anschlag 20, mit dem das Federende in Kontakt kommt, so dass die Schraubenfeder 6 am Aufnahmegehäuse 3 in einer ersten Drehrichtung abgestützt ist. Durch das Eingreifen beziehungsweise Einschrauben des Endabschnitts 16 in den von den Stegen 19 gebildeten Kanal, ist die Schraubenfeder 6 an den Stegen 19 in beide axiale Richtungen axial abgestützt, das heißt auf Druck und insbesondere auch auf Zug.

Der entgegengesetzte zweite Endabschnitt 23 der Schraubenfeder 6 ist entsprechend am Rollenträger 4 in entgegengesetzter zweiter axialer Richtung und entgegengesetzter zweiter Drehrichtung abgestützt. Hierfür hat der Rollenträger 4 in dem Deckelabschnitt 24 entsprechende gewindeartige Eingriffsmittel 25 und einen Anschlag 26 am Ende der gewindeartigen Eingriffsmittel 25. Nach dem Einsetzen und Einschrauben der Schraubenfeder 6 in das Aufnahmegehäuse 3 wird der Rollenträger 4 auf das Aufnahmegehäuse 3 aufgesetzt. Durch eine anschließende Drehbewegung des Rollenträgers 4 relativ zum Aufnahmegehäuse 3 in der Drehrichtung, in der die Schraubenfeder 6 am Aufnahmegehäuse 3 abgestützt ist, wird der zweite Endabschnitt 23 der Feder 6 in die gewindeartigen Eingriffsmittel 25 des Deckelabschnitts 24 in Eingriff gebracht. Mit zunehmendem Verdrehen des Rollenträgers 4 gegenüber der Schraubenfeder 6 greift der zweite Endabschnitt 23 zunehmend in die gewindeartigen Eingriffsmittel 25 ein, wobei die Schraubenfeder 6 auf Zug axial vorgespannt wird. Die Eingriffsmittel 25 des Deckelteils 24 sind entsprechend den Eingriffsmitteln am Bodenteil gestaltet und umfassen mehrere über den Umfang verteilte und relativ zueinander axial versetzte Stege 27, welche von dem zweiten Endabschnitt 23 der Schraubenfeder 6 beim Einschrauben hintergriffen werden. Dabei bilden die Stege 27 insgesamt einen gewindeartigen Kanal, dessen Steigung in etwa der Steigung des zweiten Endabschnitts 16 der Schraubenfeder 6 entspricht.

In vollständig montiertem Zustand sind der Rollenträger 4 und das Aufnahmegehäuse 3 axial zueinander fixiert und axial vorgespannt. Die Schraubenfeder 6 erfüllt dabei die Funktion einer federnden Abstützung des Rollenträgers 4 am Gehäuse 3 in Drehrichtung, eine axiale Fixierung des Rollenträgers 4 am Gehäuse 3, und ein axiales Beaufschlagen der Dämpfungsanordnung 7. Mit zunehmender Schwenkbewegung des Rollenträgers 4 gegenüber dem Aufnahmegehäuse 3 weitet sich die Schraubenfeder 6 zunehmend auf, so dass eine zunehmende Zugkraft von der Schraubenfeder 6 auf den Rollenträger 4 und das Gehäuse 3 einwirkt, welche die genannten Teile aufeinander zu beaufschlagt. Somit steigt die Dämpfung der Spannvorrichtung 2 mit zunehmender Auslenkung des Rollenträgers 4.

Das Aufnahmegehäuse 3 ist insbesondere topfförmig gestaltet und weist das Bodenteil 17, das auch als Bodenabschnitt oder einfach Boden bezeichnet werden kann, und ein Mantelteil 15 beziehungsweise Mantelabschnitt auf, innerhalb dem ein Aufnahmeraum für den Rollenträger 4 und die Schraubenfeder 6 gebildet ist. An einem oberen Bereich des Mantelteils 15 sind die Befestigungsabschnitte 36 einteilig angeformt beziehungsweise angegossen. Im Bereich des Bodenteils 17 befindet sich die Lageranordnung 5 und im oberen Bereich des Mantelteils 15 befindet sich die Dämpfungsanordnung 7, auf die beide weiter unten noch näher eingegangen wird.

Der Rollenträger 4 weist das Deckelteil 24, ferner ein sich vom Deckelteil 24 in Richtung Bodenteil 17 erstreckendes Nabenelement 28 sowie ein koaxial zum Nabenelement 28 angeordnetes Ringelement 29 auf. Das Nabenelement 28 ist im Bodenteil 17 mittels der Lageranordnung 5 drehbar gelagert. Das Ringelement 29 bildet einen Teil der Dämpfungsanordnung 7. Zwischen dem Nabenelement 28 und dem Ringelement 29 ist ein Ringraum gebildet ist, in welchem ein oberer Abschnitt der Schraubenfeder 6 angeordnet ist.

Die Lageranordnung 5 weist eine Lagerbuchse 30 auf, die zwischen einem als Lagerhülse gestalteten ersten Lagerteil 31 des Aufnahmegehäuses 3 und einem als Lagerbolzen gestalteten zweiten Lagerteil 32 des Rollenträgers 4 angeordnet ist. Die Lagerbuchse 30 beziehungsweise die Lagerteile 31, 32 sind zylindrisch oder leicht konisch gestaltet, wobei sich bei leicht konischer Ausgestaltung eine bessere Entformbarkeit bei der Fertigung ergibt. Der Lagerbolzen 32 ist einteilig am Nabenteil 28 des Rollenträgers 4 angeformt beziehungsweise angegossen. Als Lagerwerkstoff für die Lagerbuchse 30 kann ein geeigneter Kunststoff oder eine mit reibungsminderndem Material wie PTFE beschichtete Stahlbuchse verwendet werden.

Die Dämpfungsanordnung 7 umfasst eine Dämpfungsbuchse 33, die zwischen einer inneren Konusfläche 34 des Aufnahmegehäuses 3 und einer äußeren Ringfläche 35 des Rollenträgers 4 angeordnet ist. Die Dämpfungsbuchse 33 hat eine äußere konische Reibfläche 37, die mit der inneren Konusfläche 34 des Aufnahmegehäuses 3 in Reibkontakt ist. Dabei bilden die konische Reibfläche 37 der Dämpfungsbuchse 33 und die innere Konusfläche 34 des Aufnahmegehäuses 3 eine erste Reibflächenpaarung der Dämpfungsanordnung 7. Eine zweite Reibflächenpaarung ist zwischen der äußeren Ringfläche 35 des Rollenträgers 4 und einer inneren Ringfläche 38 der Dämpfungsbuchse 33 gebildet, die beide zylindrisch gestaltet sind. Die Dämpfungsbuchse 33 und damit die Reibflächenpaarungen werden von der Zugkraft der Schraubenfeder 6 axial beaufschlagt, wobei ein Reibmoment entsteht, so dass eine relative Drehbewegung des Rollenträgers 4 gegenüber dem Aufnahmegehäuse 3 abgedämpft wird. Gleichzeitig hat die Dämpfungsanordnung 7 auch eine Lagerfunktion zur axialen und radialen Lagerung des Rollenträgers 4 im Aufnahmegehäuse 3, so dass diese auch als Dämpfungs- und Lageranordnung bezeichnet werden kann. Die Dämpfungsanordnung 7 ist so gestaltet, dass ein größter Konuswinkel von zumindest einer der Reibflächenpaarungen, der auch als Dämpfungswinkel bezeichnet werden kann, größer ist als ein größter Winkel, den eine Mantelfläche der Lageranordnung 5 mit der Schwenkachse A einschließt.

Es ist insbesondere in Figur 2 erkennbar, dass axial zwischen der Lageranordnung 5 und der Dämpfungsanordnung 7 ein abstützungsfreier Zwischenraum gebildet ist. Die von der Spannrolle 9 in den Rollenträger 4 eingeleiteten Querkräften werden somit allein durch die Lageranordnung 5 und die hiervon axial beabstandete Dämpfungsanordnung 7 abgestützt. Die Länge L1 des abstützungsfreien Zwischenraums ist größer als die axiale Länge L5 der Lageranordnung 5 beziehungsweise der Länge L7 der Dämpfungsanordnung 7, so dass eine besonders gute Abstützung von Querkräften erreicht wird. Es ist ferner vorgesehen, dass ein mittlerer Lagerdurchmesser D5 der Lageranordnung 5 kleiner ist als ein mittlerer Durchmesser D7 der Dämpfungsanordnung 7. Zusammen mit dem axialen Abstand zwischen der Lageranordnung 5 und der Dämpfungsanordnung 7 wird somit eine gute Lagerung, Zentrierung und Abstützung gegen Kippmomente erreicht.

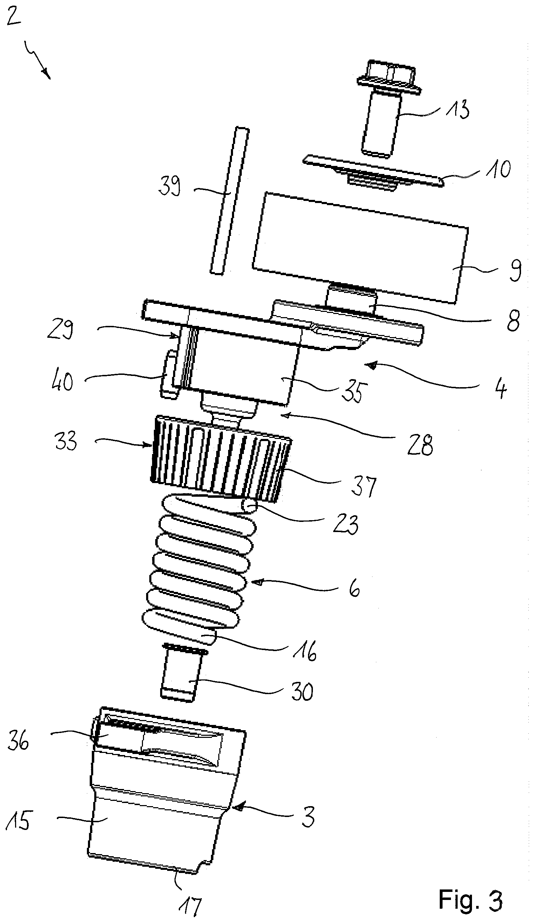

Die Figuren 3 bis 5, welche im Folgenden gemeinsam beschrieben werden, zeigen eine erfindungsgemäße Spannvorrichtung 2 in einer leicht abgewandelten zweiten Ausführungsform. Die zweite Ausführungsform entspricht hinsichtlich Aufbau und Funktionsweise weitestgehend derjenigen gemäß den Figuren 1 und 2, so dass hinsichtlich der Gemeinsamkeiten auf die obige Beschreibung Bezug genommen wird. Dabei sind gleiche beziehungsweise einander entsprechende Bauteile mit gleichen Bezugszeichen versehen wie in den Figuren 1 und 2.

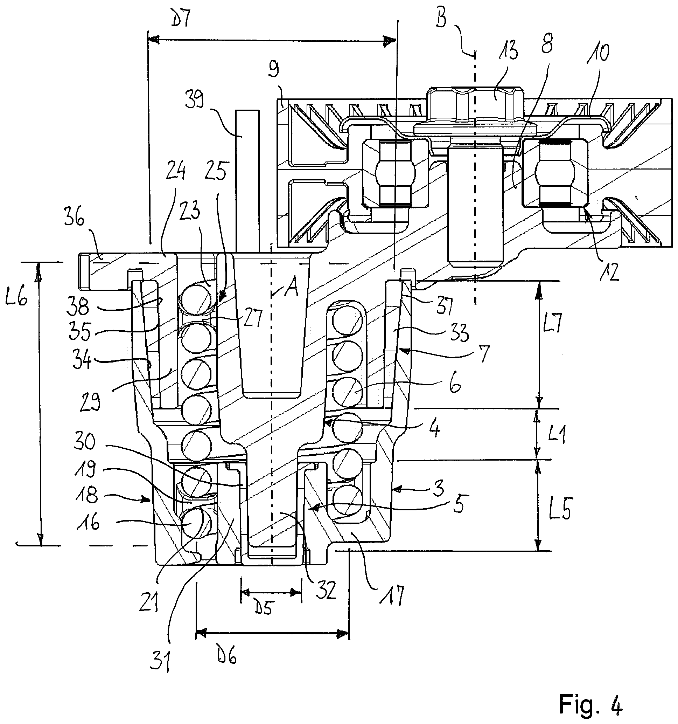

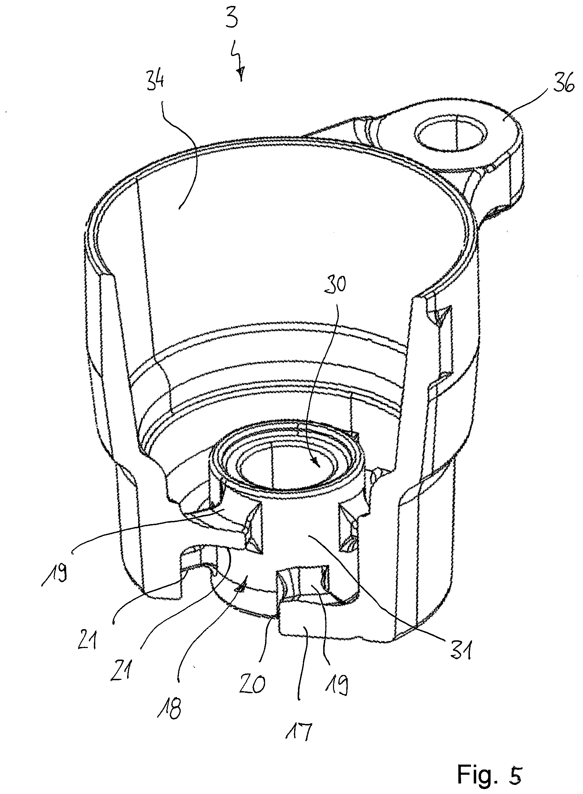

Ein Unterschied liegt darin, dass bei der Ausführungsform gemäß den Figuren 3 bis 5 die Länge L1 des abstützungsfreien Zwischenraums kleiner ist als die axiale Länge L5 der Lageranordnung 5 beziehungsweise die Länge L7 der Dämpfungsanordnung 7. Der Aufbau der Spannvorrichtung gemäß den Figuren 3 bis 5 ist in axiale Richtung insofern etwas kompakter, was entsprechend auch für den benötigten Bauraum gilt. Auch die Form des Gehäuses 3 ist etwas gedrungener. In Figur 3 ist erkennbar, dass die Dämpfungsbuchse 33 eine strukturierte konische Reibfläche 37 aufweist, was auch für die Ausführungsform gemäß den Figuren 1 und 2 gelten kann. Im Übrigen gelten alle Details der Ausführung gemäß Figur 1 und 2 auch für die abgewandelte zweite Ausführungsform. In den Figuren 3 und 4 ist ferner ein Sicherungsstift 39 erkennbar, welcher den Rollenträger 4 in einer vorgespannten Position hält und nach der Montage der Spannvorrichtung am Riementrieb gezogen wird, so dass der Riemen vorgespannt wird. In Figur 5, welche das Gehäuse teilweise geschnitten zeigt, sind die unteren Eingriffsmittel 18 mit ihren umfangsverteilten Stegen 19 gut zu erkennen, welche vom unteren Windungsabschnitt der Feder 6 hintergriffen werden, so dass letztere auf Zug vorgespannt wird. Dieser beschriebene Aufbau betreffend die Eingriffsmittel 18 und den Sicherungsstift 39 gilt gleichermaßen auch für die Ausführungsform gemäß den Figuren 1 und 2.

Die erfindungsgemäßen Spannvorrichtungen sind in vorteilhafter Weise einfach und kostengünstig herstellbar. Dadurch, dass die Schraubenfeder 6 auf Zug zwischen dem Aufnahmegehäuse 3 und dem Rollenträger 4 verbaut ist, nimmt sie neben der federnden Abstützung der genannten Teile in Drehrichtung auch eine axiale Verbindungsfunktion wahr. Durch die Verwendung einer im Wesentlichen zylindrischen Lageranordnung 5 und einer konischen Dämpfungsanordnung 7 wird eine gute Abstützung gegen Kippmomente ermöglicht, beziehungsweise eine Anfälligkeit gegen ungewünschten Schiefstand vermindert. Ein weiterer Vorteil ist, dass die Schraubenfeder 6 mit zunehmender radialer Aufweitung zunehmend auf Zug belastet wird, was zu einer zunehmenden Axialkraft auf die Dämpfungsanordnung 7 und damit einer erhöhten Dämpfung führt.

### Bezugszeichenliste

- 2: Spannvorrichtung
- 3: Aufnahmegehäuse
- 4: Rollenträger
- 5: Lageranordnung
- 6: Schraubenfeder
- 7: Dämpfungsanordnung
- 8: Lagerzapfen
- 9: Spannrolle
- 10: Dichtscheibe
- 11: Befestigungsabschnitt
- 12: Wälzlager
- 13: Schraube
- 14: Lagerteil
- 15: Mantelteil
- 16: erster Endabschnitt
- 17: Boden
- 18: Eingriffsmittel
- 19: Steg
- 20: Anschlag
- 21: Stützfläche
- 22: Stützfläche
- 23: zweiter Endabschnitt
- 24: Deckel
- 25: Eingriffsmittel
- 26: Anschlag
- 27: Steg
- 28: Nabenelement
- 29: Ringelement
- 30: Lagerbuchse
- 31: Lagerteil
- 32: Lagerteil
- 33: Dämpfungsbuchse
- 34: Konusfläche
- 35: Ringfläche
- 36: Befestigungsabschnitt
- 37: konische Reibfläche
- 38: innere Ringfläche
- 39: Sicherungsstift
- 40: Bolzen

- A: Schwenkachse
- B: Drehachse
- D: Durchmesser
- L: Länge

## Patentansprüche

1. Spannvorrichtung für ein Zugmittel, umfassend:
ein Aufnahmegehäuse (3);
einen Rollenträger (4), der mit dem Aufnahmegehäuse (3) schwenkbar verbunden ist;
eine Lageranordnung (5), mit welcher der Rollenträger (4) in dem Aufnahmegehäuse (3) um eine Drehachse drehbar gelagert ist;
eine Dämpfungsanordnung (7) zum Dämpfen einer Drehbewegung des Rollenträgers (4) relativ zum Aufnahmegehäuse (3), wobei die Dämpfungsanordnung axial beabstandet zur Lageranordnung (5) angeordnet ist;
**gekennzeichnet durch** eine Schraubenzugfeder (6), die an dem Aufnahmegehäuse (3) und dem Rollenträger (4) jeweils in Umfangsrichtung und in axiale Richtung abgestützt ist, wobei der Rollenträger (4) und das Aufnahmegehäuse (3) mittels der Schraubenzugfeder (6) gegeneinander axial fixiert sind, wobei die Dämpfungsanordnung (7) durch Zugbelastung der Schraubenzugfeder (6) axial beaufschlagt wird.

2. Spannvorrichtung nach Anspruch 1,
**dadurch gekennzeichnet,**
**dass** die Lageranordnung (5) einen mittleren Lagerdurchmesser (D5) aufweist, der kleiner ist als ein mittlerer Durchmesser (D7) der Dämpfungsanordnung (7).

3. Spannvorrichtung nach Anspruch 1 oder 2,
**dadurch gekennzeichnet,**
**dass** axial zwischen der Lageranordnung (5) und der Dämpfungsanordnung (7) ein abstützungsfreier Zwischenraum gebildet ist.

4. Spannvorrichtung nach Anspruch 3,
**dadurch gekennzeichnet,**
**dass** eine axiale Länge (L1) des abstützungsfreien Zwischenraums größer ist als zumindest eine von der axialen Länge (L5) der Lageranordnung (5) und der axialen Länge (L7) der Dämpfungsanordnung (7).

5. Spannvorrichtung nach einem der Ansprüche 1 bis 4,
**dadurch gekennzeichnet,**
**dass** die Lageranordnung (5) eine Lagerbuchse (30) umfasst, die zwischen einem Lagerteil (31) des Aufnahmegehäuses (3) und einem Lagerteil (32) des Rollenträgers (4) angeordnet ist, wobei die Lagerbuchse (30) im Wesentlichen zylindrisch gestaltet ist.

6. Spannvorrichtung nach Anspruch 5,
**dadurch gekennzeichnet,**
**dass** das Lagerteil (31) des Aufnahmegehäuses (3) in Form einer Lagerhülse gestaltet ist und dass das Lagerteil (32) des Rollenträgers (4) in Form eines Lagerbolzens gestaltet ist, der in die Lagerhülse des Aufnahmegehäuses (3) eingesteckt ist.

7. Spannvorrichtung nach einem der Ansprüche 1 bis 6,
**dadurch gekennzeichnet,**
**dass** die Dämpfungsanordnung (7) zumindest eine Reibflächenpaarung (34, 37) aufweist, die von einer Zugkraft der Schraubenzugfeder (6) axial beaufschlagt wird, so dass eine relative Drehbewegung des Rollenträgers (4) gegenüber dem Aufnahmegehäuse (3) gedämpft wird.

8. Spannvorrichtung nach einem der Ansprüche 1 bis 7,
**dadurch gekennzeichnet,**
**dass** die Dämpfungsanordnung (7) eine Dämpfungsbuchse (33) umfasst, die zwischen einer inneren Konusfläche (34) des Aufnahmegehäuses (3) und einer äußeren Ringfläche (35) des Rollenträgers (4) angeordnet ist, wobei die Dämpfungsbuchse (33) eine äußere konische Reibfläche (37) aufweist, die mit der inneren Konusfläche (34) des Aufnahmegehäuses (3) in Reibkontakt ist.

9. Spannvorrichtung nach Anspruch 8,
**dadurch gekennzeichnet,**
**dass** die konische Reibfläche (37) der Dämpfungsbuchse (33) relativ zur Drehachse (A) stärker geneigt ist als eine äußere Lagerfläche der Lagerbuchse (30).

10. Spannvorrichtung nach einem der Ansprüche 5 bis 9,
**dadurch gekennzeichnet,**
**dass** die Lagerbuchse (30) und die Dämpfungsbuchse (33) aus unterschiedlichen Materialien hergestellt sind.

11. Spannvorrichtung nach einem der Ansprüche 1 bis 10,
**dadurch gekennzeichnet,**
**dass** der Rollenträger (4) ein Nabenelement (28) und ein Ringelement (29) aufweist, wobei das Ringelement (29) das Nabenelement (28) radial außen umgibt und die äußere Ringfläche (35) zur Aufnahme der Dämpfungsbuchse (33) bildet,
wobei zwischen dem Nabenelement (28) und dem Ringelement (29) ein Ringraum gebildet ist, in welchem ein Abschnitt der Schraubenfeder (6) angeordnet ist.

12. Spannvorrichtung nach Anspruch 11,
**dadurch gekennzeichnet,**
**dass** die äußere Ringfläche (35) des Ringelements (29) zylindrisch ist.

13. Spannvorrichtung nach einem der Ansprüche 1 bis 12,
**dadurch gekennzeichnet,**
**dass** die Schraubenfeder (6) einen ersten Endabschnitt (16) aufweist, der in montiertem Zustand am Aufnahmegehäuse (3) in Umfangsrichtung und in axialer Richtung abgestützt ist, sowie einen zweiten Endabschnitt (23), der in montiertem Zustand am Rollenträger (4) in Umfangsrichtung und in axialer Richtung abgestützt ist.

14. Spannvorrichtung nach einem der Ansprüche 1 bis 13,
**dadurch gekennzeichnet,**
**dass** das Aufnahmegehäuse (3) einen Boden (17) mit gewindeartigen Eingriffsmitteln (18) und mit einem Anschlag (20) am Ende der gewindeartigen Eingriffsmittel (18) aufweist, wobei die Schraubenfeder (6) zur Montage in die gewindeartigen Eingriffsmittel (18) bis zum Erreichens des Anschlags (20) einschraubbar ist.

15. Spannvorrichtung nach einem der Ansprüche 1 bis 14,
**dadurch gekennzeichnet,**
**dass** der Rollenträger (4) einen Deckel (24) mit gewindeartigen Eingriffsmitteln (25) und mit einem Anschlag (26) am Ende der gewindeartigen Eingriffsmittel (25) aufweist, wobei der zweite Endabschnitt (23) der Schraubenfeder (6) durch eine Einsteck- und Drehbewegung des Rollenträgers (4) gegenüber dem Aufnahmegehäuse (3) mit den gewindeartigen Eingriffsmitteln (25) des Deckels (24) in Eingriff bringbar ist.

## Claims

1. A tensioning device for a traction drive, comprising:
a receiving housing (3);
a roller carrier (4) which is pivotably connected to the receiving housing (3);
a bearing arrangement (5) by which the roller carrier (4) is supported in the receiving housing (3) so as to be rotatable around a rotational axis;
a damping arrangement (7) for damping a rotational movement of the roller carrier (4) relative to the receiving housing (3), wherein the damping arrangement (7) is arranged so as to be axially spaced relative to the bearing arrangement (5) ;
**characterised by** a helical tension spring (6) which is supported at the receiving housing (3) and at the roller carrier (4) each in circumferential and axial direction,
wherein the roller carrier (4) and the receiving housing (3) are axially connected to one another by the helical tension spring (6), wherein the damping arrangement (7) is axially loaded by a tensional load of the helical tension spring (3).

2. A tensioning device according to claim 1
**characterised in**
**that** the bearing arrangement (5) comprises a medium bearing diameter (D5) which is smaller than a medium diameter (D7) of the damping arrangement (7).

3. A tensioning device according to claim 1 or 2,
**characterised in**
**that** a support-free intermediate space is formed axially between the bearing arrangement (5) and the damping arrangement (7).

4. A tensioning device according to claim 3,
**characterised in**
**that** an axial length (L1) of the support-free intermediate space is greater than at least one of the axial length (L5) of the bearing arrangement (5) and of the axial length (L7) of the damping arrangement (7).

5. A tensioning device according to any one of claim 1 to 4,
**characterised in**
**that** the bearing arrangement (5) comprises a bearing bush (30) which is arranged between a bearing part (31) of the receiving housing (3) and a bearing part (32) of the roller carrier (4), wherein the bearing bush (30) is substantially cylindrical.

6. A tensioning device according to claim 5,
**characterised in**
**that** the bearing part (31) of the receiving housing (3) is provided in the form of a bearing sleeve and that the bearing part (32) of the roller carrier (4) is provided in the form of a bearing bolt which is inserted into the bearing sleeve of the receiving housing (3).

7. A tensioning device according to any one of claims 1 to 6,
**characterised in**
**that** the damping arrangement (7) comprises at least one pair of friction faces (34, 37) which is axially loaded by a tensile force of the helical tension spring (6), so that a relative rotational movement of the roller carrier (4) relative to the receiving housing (3) is dampened.

8. A tensioning device according to any one of claims 1 to 7,
**characterised in**
**that** the damping arrangement (7) comprises a damping bush (33) which is arranged between an inner conical face (34) of the receiving housing (3) and an outer annular face (35) of the roller carrier (4), wherein the damping bush (33) comprises an outer conical friction face (37) which is in friction contact with an inner conical face (34) of the receiving housing (3).

9. A tensioning device according to claim 8,
**characterised in**
**that** the conical friction face (37) of the damping bush (33) is inclined more relative to the rotational axis (A), than an outer bearing face of the bearing bush (30) .

10. A tensioning device according to any one of claim 5 to 9,
**characterised in**
**that** the bearing bush (30) and the damping bush (33) are made of different materials.

11. A tensioning device according to any one of claims 1 to 10,
**characterised in**
**that** the roller carrier (4) comprises a hub element (28) and a ring element (29) wherein the ring element (29) surrounds the hub element (28) radially outside and forms the outer ring face (35) for receiving the damping bush (33),
wherein between the hub element (28) and the ring element (29) an annular chamber is formed in which a portion of the helical spring (6) is arranged.

12. A tensioning device according to claim 11,
**characterised in**
**that** the outer ring face (35) of the ring element (29) is cylindrical.

13. A tensioning device according to any one of claims 1 to 12,
**characterised in**
**that** the helical spring (6) comprises a first end portion (16) which, in the mounted condition, is circumferentially and axially supported at the receiving housing (3), as well as a second end portion (23) which, in the mounted condition, is circumferentially and axially supported at the roller carrier (4).

14. A tensioning device according to any one of claim 1 to 13,
**characterised in**
**that** the receiving housing (3) comprises a base (17) with thread-like engagement means (18) and a stop (20) at the end of the thread-like engagement means (18), wherein, for mounting, the helical spring (6) is threaded into the thread-like engagement means (18) up to reaching the stop (20).

15. A tensioning device according to any one of claims 1 to 14,
**characterised in**
**that** the roller carrier (4) comprises a cover (24) with thread-like engagement means (25) and with a stop (26) at the end of the thread-like engagement means (25), wherein the second end portion (23) of the helical spring (6) can be made to engage the thread-like engagemenet means (25) of the cover (24) by an inserting and rotational movement of the roller carrier (4) relative to the receiving housing (3).

## Revendications

1. Dispositif de serrage pour un moyen de traction, comprenant :
un boîtier de réception (3) ;
un support de rouleau (4) relié de façon pivotante au boîtier de réception (3) ;
un ensemble de palier (5) avec lequel le support de rouleau (4) est monté de façon rotative autour d'un axe de rotation dans le boîtier de réception (3) ;
un ensemble d'amortissement (7) destiné à amortir un mouvement de rotation du support de rouleau (4) par rapport au boîtier de réception (3), l'ensemble d'amortissement étant disposé de façon axialement espacée par rapport à l'ensemble de palier (5) ;
**caractérisé par** un ressort de traction hélicoïdal (6) prenant appui sur le boîtier de réception (3) et le support de rouleau (4) respectivement dans la direction du pourtour et dans la direction axiale, le support de rouleau (4) et le boîtier de réception (3) étant fixés axialement l'un par rapport à l'autre au moyen du ressort de traction hélicoïdal (6), l'ensemble d'amortissement (7) étant sollicité axialement par contrainte de traction du ressort de traction hélicoïdal (6).

2. Dispositif de serrage selon la revendication 1,
**caractérisé en ce que**
l'ensemble de palier (5) présente un diamètre de palier moyen (D5) inférieur à un diamètre moyen (D7) de l'ensemble d'amortissement (7).

3. Dispositif de serrage selon la revendication 1 ou 2,
**caractérisé en ce que**
un espace intermédiaire exempt d'appui est formé axialement entre l'ensemble de palier (5) et l'ensemble d'amortissement (7).

4. Dispositif de serrage selon la revendication 3,
**caractérisé en ce que**
une longueur axiale (L1) de l'espace intermédiaire exempt d'appui est supérieure à l'une au moins parmi la longueur axiale (L5) de l'ensemble de palier (5) et la longueur axiale (L7) de l'ensemble d'amortissement (7) .

5. Dispositif de serrage selon l'une des revendications 1 à 4,
**caractérisé en ce que**
l'ensemble de palier (5) comporte une douille de palier (30) disposée entre une pièce de palier (31) du boîtier de réception (3) et une pièce de palier (32) du support de rouleau (4), la douille de palier (30) étant conçue de façon essentiellement cylindrique.

6. Dispositif de serrage selon la revendication 5,
**caractérisé en ce que**
la pièce de palier (31) du boîtier de réception (3) est conçue sous la forme d'un coussinet de palier et **en ce que** la pièce de palier (32) du support de rouleau (4) est conçue sous la forme d'un boulon de palier, lequel est inséré dans le coussinet de palier du boîtier de réception (3).

7. Dispositif de serrage selon l'une des revendications 1 à 6,
**caractérisé en ce que**
l'ensemble d'amortissement (7) présente au moins un accouplement de surfaces de frottement (34, 37), lequel est sollicité axialement par une force de traction du ressort de traction hélicoïdal (6), de manière à amortir un mouvement de rotation relatif du support de rouleau (4) par rapport au boîtier de réception (3).

8. Dispositif de serrage selon l'une des revendications 1 à 7,
**caractérisé en ce que**
l'ensemble d'amortissement (7) comporte une douille d'amortissement (33) disposée entre une surface conique intérieure (34) du boîtier de réception (3) et une surface annulaire extérieure (35) du support de rouleau (4), la douille d'amortissement (33) présentant une surface de frottement conique extérieure (37) en contact de frottement avec la surface conique intérieure (34) du boîtier de réception (3).

9. Dispositif de serrage selon la revendication 8,
**caractérisé en ce que**
la surface de frottement conique (37) de la douille d'amortissement (33) est davantage inclinée par rapport à l'axe de rotation (A) qu'une surface de palier extérieure de la douille de palier (30).

10. Dispositif de serrage selon l'une des revendications 5 à 9,
**caractérisé en ce que**
la douille de palier (30) et la douille d'amortissement (33) sont constituées de matériaux différents.

11. Dispositif de serrage selon l'une des revendications 1 à 10,
**caractérisé en ce que**
le support de rouleau (4) présente un élément de moyeu (28) et un élément annulaire (29), l'élément annulaire (29) entourant l'élément de moyeu (28) radialement à l'extérieur et formant la surface annulaire extérieure (35) pour la réception de la douille d'amortissement (33),
dans lequel un espace annulaire est formé entre l'élément de moyeu (28) et l'élément annulaire (29), dans lequel est disposée une section du ressort hélicoïdal (6).

12. Dispositif de serrage selon la revendication 11,
**caractérisé en ce que**
la surface annulaire extérieure (35) de l'élément annulaire (29) est cylindrique.

13. Dispositif de serrage selon l'une des revendications 1 à 12,
**caractérisé en ce que**
le ressort hélicoïdal (6) présente une première section d'extrémité (16) appuyée, dans l'état monté, sur le boîtier de réception (3) dans la direction du pourtour et dans la direction axiale, ainsi qu'une deuxième section d'extrémité (23) appuyée, dans l'état monté, sur le support de rouleau (4) dans la direction du pourtour et dans la direction axiale.

14. Dispositif de serrage selon l'une des revendications 1 à 13,
**caractérisé en ce que**
le boîtier de réception (3) présente un fond (17) avec des moyens de prise du genre filets (18) et avec une butée (20) à l'extrémité des moyens de prise du genre filets (18), le ressort hélicoïdal (6) pouvant être vissé dans les moyens de prise du genre filets (18) jusqu'à l'atteinte de la butée (20) pour le montage.

15. Dispositif de serrage selon l'une des revendications 1 à 14,
**caractérisé en ce que**
le support de rouleau (4) présente un couvercle (24) avec des moyens de prise du genre filets (25) et avec une butée (26) à l'extrémité des moyens de prise du genre filets (25), la deuxième section d'extrémité (23) du ressort hélicoïdal (6) pouvant être mise en prise avec les moyens de prise du genre filets (25) du couvercle (24) par un mouvement d'insertion et de rotation du support de rouleau (4) par rapport au boîtier de réception (3).
